# EUROPÄISCHE PATENTSCHRIFT

(11) **EP 0 796 168 B1**
(45) Veröffentlichungstag und Bekanntmachung des Hinweises auf die Patenterteilung: **20.05.1998**
(21) Anmeldenummer: 95936928.1
(22) Anmeldetag: 01.12.1995
(51) Int. Cl.: B29C 65/02, B65B 51/30, B31B 23/64

(54) **QUERSIEGELVORRICHTUNG FÜR EINE SCHLAUCHBEUTEL-VERPACKUNGSMASCHINE**
TRANSVERSE SEALING DEVICE FOR TUBULAR BAG FORMING, FILLING AND SEALING MACHINES
DISPOSITIF DE SCELLEMENT TRANSVERSAL POUR MACHINES A FORMER ET A REMPLIR DES SACHETS TUBULAIRES

(30) Priorität: 06.12.1994 CH 3696/94
(43) Veröffentlichungstag der Anmeldung: 24.09.1997
(73) Patentinhaber: SIG Schweizerische Industrie-Gesellschaft, 8212 Neuhausen am Rheinfall (CH)
(72) Erfinder: LOEWENTHAL, Horst, D-79761 Tiengen (DE)
(74) Vertreter: Münch, Otto
(86) Internationale Anmeldenummer: CH9500285
(87) Internationale Veröffentlichungsnummer: WO9617720

(56) Entgegenhaltungen:
- EP-A- 0 308 861
- EP-A- 0 469 819
- EP-A- 0 509 666
- DE-B- 1 114 630
- GB-A- 2 052 372
- US-A- 4 120 235

## Beschreibung

Aus der US-PS 2 467 879 ist eine Vorrichtung zum Querversiegeln von Schlauchbeuteln bekannt. Die beiden zusammenwirkenden Quersiegelbacken sind auf je einem Träger federnd gelagert, der durch je ein Parallelogramm-Kurbelgetriebe auf einer Kreisbahn umläuft. Dabei bleiben die beiden Siegelbacken während des Umlaufs parallel zueinander. Dadurch gelingt es, die Siegelnaht über eine gewisse Vorschubstrecke des Verpackungsschlauches durchzuführen. Damit können gegenüber üblichen, zylindersegmentförmigen, umlaufenden Siegelbacken zum Beispiel gemäss EP-A-399 948 höhere Kadenzen erreicht werden. Allerdings verursacht die Quersiegelvorrichtung mehr Lärm als herkömmliche Quersiegelvorrichtungen.

Der vorliegenden Erfindung liegt die Aufgabe zugrunde, eine Quersiegelvorrichtung der eingangs genannten Art derart weiterzubilden, dass sie im Betrieb leiser arbeitet. Diese Aufgabe wird durch die Merkmalskombination der Ansprüche gelöst.

Nachfolgend wird ein Ausführungsbeispiel der Erfindung anhand der Zeichnungen erläutert. Darin zeigt:
- Figur 1: eine schematische Seitenansicht einer Quersiegelvorrichtung, und
- Figur 2: einen Teil einer Variante der Vorrichtung nach Figur 1.

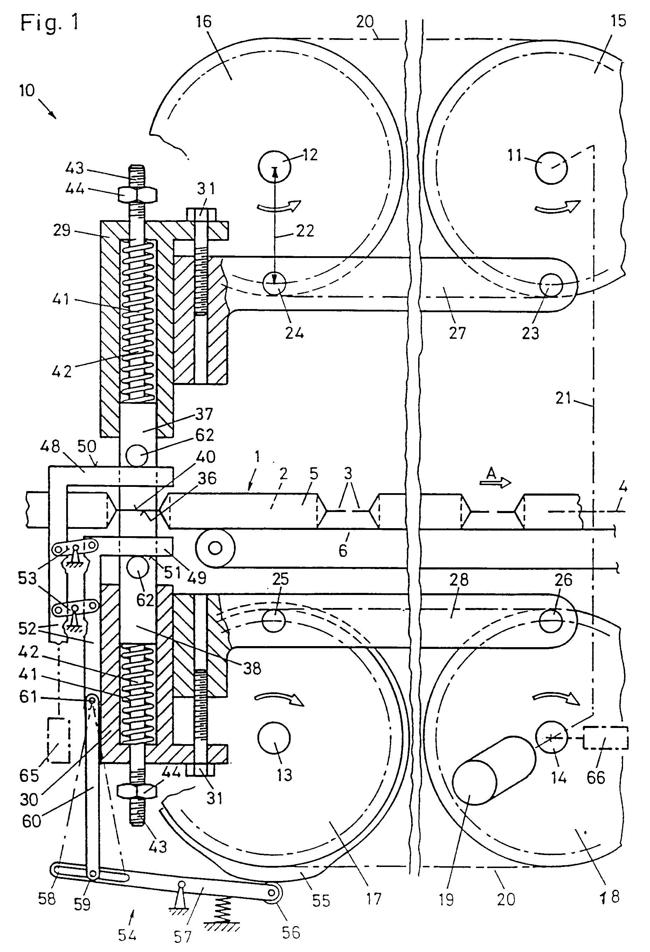

In Figur 1 ist schematisch eine Seitenansicht einer erfindungsgemässen Vorrichtung 10 dargestellt. Mit nicht dargestellten Mitteln, z.B. gemäss EP-A-399 948, wird ein Verpackungsschlauch 1 zugeführt, der in regelmässigen Abständen Produkte 2 enthält. Mit der Vorrichtung 10 werden zwischen den Produkten 2 Quersiegelnähte 3 in der Mittelebene 4 des Schlauches 1 gebildet und in der Mitte durchgeschnitten. Die Einzelpackungen 5 werden auf einem Förderband 6 in Förderrichtung A abtransportiert.

Auf je zwei voneinander beabstandeten oberen und unteren Wellen 11, 12, 13, 14 sind insgesamt vier Kurbelräder 15-18 montiert, die durch einen Antriebsmotor 19 alle synchron angetrieben sind. Die oberen Räder 15, 16 laufen im Gegenuhrzeigersinn, die untern im Urzeigersinn. Die Getriebeverbindungen zwischen Motor 19 und Rädern 15-18 sind symbolisch durch Ketten 20 und einen Getriebezug 21 angedeutet. Mit mindestens annähernd gleichmässigem Radius 22 von den Wellen 11-14 tragen die Räder 15-18 achsparallele Zapfen 23-26. Auf den Zapfen 23, 24 der oberen Räder 15, 16 ist ein oberer Träger 27 so drehbar gelagert, dass er mit den Kurbelradien 22 und der Verbindungslinie zwischen den Wellen 11, 12 mindestens annähernd ein Parallelogramm bildet, sodass bei laufenden Rädern 15, 16 der Träger 27 parallel zu sich selbst umläuft. In gleicher Weise ist an den Zapfen 25, 26 ein unterer Träger 28 befestigt. Der obere Träger 27 und der untere Träger 28 tragen an ihrem hinteren Stirnende je einen Querbalken 29, 30. Die Querbalken 29, 30 sind an den Trägern 27, 28 in der Höhe verschiebbar geführt und durch Schrauben 31 einstellbar. In geeigneter Position können die Querbalken 29, 30 auch fest mit den Trägern 27, 28 verbunden sein.

In den Balken 29, 30 sind eine Siegelbacke 37 bzw. eine Gegenbacke 38 in der Höhe verschiebbar geführt. Die Backen 37, 38 haben parallele, ebene Siegelfläche 39 bzw. Gegenfläche 40 und sind durch mehrere Federn 41 in Richtung zur Mittelebene 4 vorbelastet. Eine der Backen 37, 38 hat mittig ein nicht dargestelltes Messer zum Durchtrennen des Schlauches 1 während der Siegelung. An den Backen 37, 38 sind je zwei Führungsstangen 42 befestigt, welche die Balken 29, 30 überragen und an ihrem freien Ende ein Gewinde 43 tragen, auf welches eine Einstellmutter 44 aufgeschraubt ist. Durch Einstellen der Schrauben 31 und Muttern 44 kann der Drehwinkel der Räder 15-18 eingestellt werden, bei welchem die Flächen 39, 40 zur Anlage kommen, damit also auch die Wegstrecke, während welcher die Siegelung durchgeführt wird. Zusätzlich kann mit diesen Einstellmitteln die Vorspannung der Federn 41 und damit der Siegeldruck eingestellt werden. Statt Federn 41 kann auch Pressluft oder ein anderes Fluid als Presselement verwendet werden.

Um ein Aufeinanderschlagen der beiden Backen 37, 38 zu verhindern, sind beidseits je zwei Auflageleisten 48, 49 mit zur Mittelebene 4 parallelen, ebenen Auflageflächen 50, 51 senkrecht zur Mittelebene 4 beweglich geführt. Bei der schematischen Darstellung nach Figur 1 steht von den Auflageleisten 48, 49 je ein Schenkel 52 ab. Die beiden Schenkel 52 sind durch zwei in ihrer Mitte schwenkbar gelagerte Parallelogrammhebel 53 miteinander verbunden mit welchen sie zwei Parallelogrammgelenke bilden. Der eine der beiden Schenkel 52 wird durch eine Steuereinrichtung 54 betätigt. Im dargestellten Beispiel besteht diese aus einer mit dem Rad 17 starr verbundenen Kurvenscheibe 55, auf welcher eine Rolle 56 am einen Ende eines doppelarmigen, schwenkbar gelagerten Hebels 57 abrollt. Der andere Arm des Hebels 57 hat ein Langloch 58, in welchem das eine Gelenk 59 einer Gelenkstange 60 einstellbar befestigt ist. Das andere Gelenk 61 der Stange 60 ist mit dem einen Schenkel 52 verbunden. Von den Backen 37, 38 stehen beidseitig Anschlagrollen 62 ab, welche um Achsen parallel zur Mittelebene 4 und senkrecht zur Vorschubrichtung A an den Backen 37, 38 drehbar gelagert sind.

Wenn die Kurbelräder drehen, laufen die Balken 29, 30 gegenläufig aber zu sich parallel auf Kreisbahnen um. Durch die Kurvenscheibe 55 werden die Auflageleisten 48, 49 im gleichen Takt auseinander und gegeneinander bewegt. Die Kurvenscheibe 55 ist so ausgebildet und die Einstellmittel 31, 44, 58, 59 werden so eingestellt, dass die Rollen 62 auf den Auflageflächen 50, 51 mit keiner oder geringer Relativgeschwindigkeit der Bewegungskomponente senkrecht zur Mittelebene 4 auftreffen, bevor die Backen 37, 38 zur pressenden Anlage gegen den Schlauch 1 gelangen. Beim Auftreffen der Rollen 62 bewegen sich dazu die Leisten 48, 49 gegeneinander. Unmittelbar nach dem Auftreffen wird die Bewegung der Leisten 48, 49 gegeneinander so verzögert, dass die Backen 37, 38 sanft zur pressenden Anlage gegen den Schlauch gelangen. Die Leisten 48, 49 werden darauf noch etwas weiter gegeneinander bewegt, sodass die Backen 37, 38 mit der Vorspannkraft der Federn 41 gegen den Schlauch pressen. Beim Weiterdrehen werden die Backen 37, 38 in die Balken 29, 30 eingedrückt, bis der in Figur 1 dargestellte Totpunkt erreicht ist. Anschliessend fahren die Backen 37, 38 wieder aus, bis die Muttern 44 zur Anlage an die Balken 29, 30 gelangen. Unmittelbar vor diesem Zeitpunkt werden die Leisten 48, 49 gesteuert durch die Kurvenscheibe 55 wieder mit zunehmender Geschwindigkeit auseinander bewegt, sodass die Backen 37, 38 annähernd auf die Geschwindigkeitskomponente senkrecht zur Mittelebene 4 beschleunigt werden, welche sie beim Anschlag der Mutter 44 haben.

Durch diese Ausbildung werden Schläge sowohl der Backen 37, 38 gegeneinander als auch der Muttern 44 gegen die Balken 29, 30 weitgehend vermieden. Dadurch wird der Lärm erheblich reduziert und die Materialbeanspruchung gering gehalten, weil der Einfluss der Massenkräfte reduziert wird. Dadurch wird die Betriebssicherheit erhöht. Ausserdem kann die Wegstrecke, über welche die Backen 37, 38 gegeneinander pressen, verlängert werden. Dadurch können höhere Durchlaufgeschwindigkeiten oder eine längere und gleichmässigere Wärmeübertragung auf den Schlauch 1 und damit eine bessere Siegelqualität erzielt werden. Die Einstellung auf unterschiedliche Betriebszustände, z.B. unterschiedliche Dicken der Einschlagmaterialfolie des Schlauches 1 ist einfach möglich. Die Stromzuführung für die Siegelbacken ist einfach, weil keine Schleifringe benötigt werden.

Statt mittels der Kurvenscheibe 55 können die Leisten 48, 49 auch durch einen Servo-Hubmotor 65 gesteuert werden, der durch eine nicht dargestellte Steuereinrichtung programmgesteuert ist, wobei als Referenzsignal der Ausgang eines Drehwinkelsgebers 66 dient, der mit einem der Räder 18 oder mit dem Motor 19 verbunden ist. Diese Variante ist in Figur 1 strichpunktiert angedeutet. Sie hat den Vorteil, dass der Bewegungsverlauf der Leisten 48, 49 einfach durch Programmänderung verstellt werden kann.

Als zusätzliche Einstellmöglichkeit können die Lager der Achsen 11-14 quer zur Mittelebene 14 einstellbar ausgebildet werden.

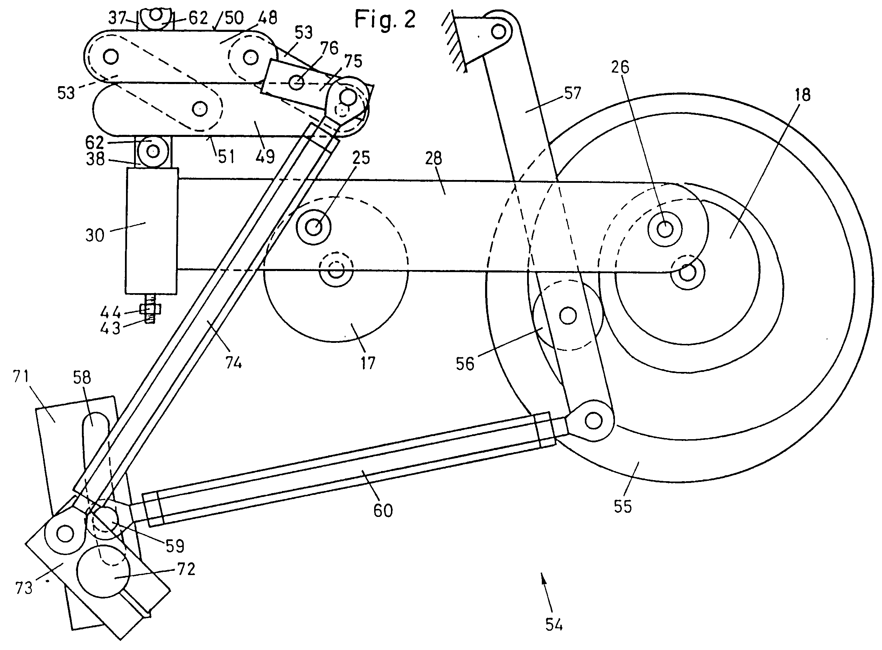

In Figur 2 ist eine Variante der Steuereinrichtung 54 dargestellt. Die Kurvenscheibe 55 ist hier am einen der Räder 18 auf der einen Maschinenseite befestigt. Die Gelenkstange 60 betätigt einen Hebel 71. Der Hebel 71 sitzt drehfest auf einer Welle 72, welche über die Maschinenbreite durchgeht. Er hat das Langloch 58, in welchem das Gelenk 59 einstellbar befestigt ist. Auf der Welle 72 ist beidseits je ein weiterer Hebel 73 befestigt. Die Hebel 73 sind über je eine Gelenkstange 74 mit einem weiteren Hebel 75 verbunden, der drehfest mit der Schwenkachse 76 des einen Parallelogrammhebels 53 verbunden ist. Die Hebel 53 sind direkt mit den Auflageleisten 48, 49 zu einem Parallelogrammgestänge verbunden.

## Patentansprüche

1. Quersiegelvorrichtung zum Versiegeln eines Verpackungsschlauches (1), insbesondere für eine Schlauchbeutel-Verpackungsmaschine, umfassend
- zwei auf gegenüberliegenden Seiten einer Mittelebene (4) des Verpackungsschlauches (1) angeordnete Antriebseinheiten (15-21), welche einen ersten und zweiten Halter (27-30) umlaufend synchron und gegenläufig antreiben,
- eine im ersten Halter (27, 29) verschiebbar geführte und durch ein erstes Anpresselement (41) gegen einen ersten Anschlag (44) vorbelastete Siegelbacke (37), von der ein erstes Anschlagelement (62) absteht,
- eine im zweiten Halter (28, 30) verschiebbar geführte und durch ein zweites Anpresselement (41) gegen einen zweiten Anschlag (44) vorbelastete Gegenbacke (38), von der ein zweites Anschlagelement (62) absteht,
- zwei bewegliche Auflageelemente (48, 49) mit Auflageflächen (50, 51),
- eine Steuereinrichtung (54), um die Auflageelemente (48, 49) derart zu bewegen, dass das erste und zweite Anschlagelement (62) auf die zugehörige Auflagefläche (50, 51) aufläuft, bevor die Siegelbacke (37) und die Gegenbacke (38) zur pressenden Anlage auf den Schlauch (1) auftreffen, und dass die beiden Auflageelemente (48, 49) anschliessend gegeneinander bewegt werden, um die Bewegungskomponenten senkrecht zur Mittelebene der Siegelbacke (37) und der Gegenbacke (38) geführt zu verzögern.

2. Vorrichtung nach Anspruch 1, wobei die Steuerelemente (54) derart ausgebildet sind, dass die Auflageelemente (48, 49) zur Anlage der Auflageflächen (50, 51) an das erste und zweite Anschlagelement (62) bewegt werden, bevor die Siegelbacke (37) von der Gegenbacke (38) abhebt, und dass die Siegelbacke (37) und Gegenbacke (38) auf eine zunehmend höhere Geschwindigkeit quer zur Mittelebene (4) beschleunigt werden.

3. Vorrichtung nach Anspruch 1 oder 2, wobei die Antriebseinheiten (15-21) derart ausgebildet sind, dass die Siegelseite (39) der Siegelbacke (37) immer gegen die Gegenseite (40) der Gegenbacke (38) orientiert ist.

4. Vorrichtung nach Anspruch 3, wobei der erste und zweite Halter (27, 28) an je zwei umlaufenden, synchron angetriebenen Kurbeln (15-18) mit annähernd gleich langen Kurbelradien (22) drehbar gelagert ist.

5. Vorrichtung nach Anspruch 4, wobei die Länge der Auflageflächen (50, 51) mindestens 0,05 des Kurbelradius (22) beträgt und die Auflageflächen (50, 51) vorzugsweise eben sind.

6. Vorrichtung nach einem der Ansprüche 1-5, wobei die beiden Anschlagelemente (62) als von der Siegelbacke (37) bzw. der Gegenbacke (38) seitlich abstehende, um Achsen parallel zur Mittelebene (4) drehbar gelagerte Rollen ausgebildet sind.

7. Vorrichtung nach einem der Ansprüche 1-6, wobei jedes Auflageelement (48, 49) ein Glied je eines Parallelogrammgelenks (48, 49, 53) ist, von dem je ein Schenkel mit der Steuereinrichtung (54) antriebsverbunden ist.

8. Vorrichtung nach einem der Ansprüche 1-7, wobei das Rotationszentrum der Siegelbacke (37) und der Gegenbacke (38) quer zur Mittelebene (4) einstellbar ist.

9. Vorrichtung nach einem der Ansprüche 1-8, wobei die Steuereinrichtung (54) Einstellmittel (58, 59) aufweist.

10. Vorrichtung nach einem der Ansprüche 1-9, wobei die Anschläge (44) und die Vorspannung der Siegelbacke (37) und der Gegenbacke (38) einstellbar sind.

## Claims

1. A transverse sealing apparatus for sealing a packaging tube (1), in particular, for a tubular bag packaging machine, comprising
- two drive units (15-21) arranged on opposite sides of a center plane (4) of the packaging tube (1), which drive a first and second holder (27-30) to be circulating synchronously and counter to one another,
- a sealing jaw (37), which is guided in the first holder (27, 29) so as to be displaceable and biased by a first contact pressure element (41) against a first stop (44), from which sealing jaw is projecting a first stop element (62),
- an opposite jaw (38), which is guided in the second holder (28, 30) so as to be displaceable and biased by a second contact pressure element (41) against a second stop (44), from which opposite jaw is projecting a second stop element (62),
- two movable supporting elements (48, 49) with supporting surfaces (50, 51),
- a control device (54) for moving the supporting elements (48, 49) in such a way that the first and second stop element (62) run onto the associated supporting surface (50, 51) before the sealing jaw (37) and the opposite jaw (38) impact the tube (1) for pressing contact, and that the two supporting elements (48, 49) are subsequently moved toward one another to delay the motion component perpendicularly to the center plane of the sealing jaw (37) and of the opposite jaw (38) in a guided manner.

2. An apparatus according to claim 1, wherein the control elements (54) are configured such that the supporting elements (48, 49) are moved against the first and second stop element (62) for the contact of the supporting surfaces (50, 51) before the sealing jaw (37) lifts off from the opposite jaw (38), and that the sealing jaw (37) and opposite jaw (38) are accelerated to an increasingly higher speed transversely to the center plane (4).

3. An apparatus according to claim 1 or 2, wherein the drive units (15-21) are configured such that the sealing side (39) of the sealing jaw (37) is always oriented toward the opposite side (40) of the opposite jaw (38).

4. An apparatus according to claim 3, wherein the first and second holder (27, 28) is respectively rotatably seated on two circulating, synchronously driven cranks (15-18) having crank radii (22) of approximately identical length.

5. An apparatus according to claim 4, wherein the length of the supporting surfaces (50, 51) is at least 0.05 of the crank radius (22) and the supporting surfaces (50, 51) are preferably plane.

6. An apparatus according to one of claims 1-5, wherein the two stop elements (62) are configured as rollers which project laterally from the sealing jaw (37) or the opposite jaw (38) and are seated so as to be rotatable around axes parallel to the center plane (4).

7. An apparatus according to one of claims 1-6, wherein each supporting element (48, 49) is a member of respectively a parallelogram joint (48, 49, 53) of which one leg each is drive-connected with the control device (54).

8. An apparatus according to one of claims 1-7, wherein the rotational center of the sealing jaw (37) and of the opposite jaw (38) is adjustable transversely to the center plane (4).

9. An apparatus according to one of claims 1-8, wherein the control device (54) has adjusting means (58, 59).

10. An apparatus according to one of claims 1-9, wherein the stops (44) and the bias of the sealing jaw (37) and of the opposite jaw (38) are adjustable.

## Revendications

1. Dispositif de scellement transversal pour sceller un boyau d'emballage (1), en particulier pour une machine à former et à remplir des sachets, comprenant
- deux unités d'entraînement (15 à 21), qui sont disposées de part et d'autre d'un plan médian (4) du boyau d'emballage (1) et qui entraînent un premier et un second support (27 à 30) en les faisant circuler de façon synchrone et dans des sens opposés,
- une mâchoire de scellement (37) qui est guidée à coulissement dans le premier support (27, 29) et est précontrainte vers une première butée (44) par un premier élément de pression (41), et sur laquelle fait saillie un premier élément formant butée (62),
- une contre-mâchoire (38) qui est guidée à coulissement dans le second support (28, 30) et est précontrainte vers une seconde butée (44) par un second élément de pression (41), et sur laquelle fait saillie un second élément formant butée (62),
- deux éléments d'appui mobiles (48, 49) présentant des surfaces d'appui (50, 51),
- un mécanisme de commande (54) destiné à déplacer les éléments d'appui (48, 49) d'une façon telle, que le premier et le second élément formant butée (62) entrent en contact avec la surface d'appui correspondante (50, 51) avant que la mâchoire de scellement (37) et la contre-mâchoire (38) ne se rencontrent pour s'appliquer, en le pressant, sur le boyau (1), et que les deux éléments d'appui (48, 49) soient ensuite déplacés dans des directions opposées, pour retarder les composantes de déplacement dirigées perpendiculairement au plan médian de la mâchoire de scellement (37) et de la contre-mâchoire (38).

2. Dispositif selon la revendication 1, dans lequel les éléments de commande (54) sont conçus d'une façon telle, que les éléments d'appui (48, 49) soient déplacés, pour appliquer les surfaces d'appui (50, 51) sur le premier et le second élément formant butée (62), avant que la mâchoire de scellement (37) ne se décolle de la contre-mâchoire (38), et que la mâchoire de scellement (37) et la contre-mâchoire (38) soient accélérées à une vitesse de plus en plus élevée transversalement au plan médian (4).

3. Dispositif selon la revendication 1 ou 2, dans lequel les unités d'entraînement (15 à 21) sont conçues d'une façon telle, que la face de scellement (39) de la mâchoire de scellement (37) soit toujours orientée vers la face conjuguée (40) de la contre-mâchoire (38).

4. Dispositif selon la revendication 3, dans lequel les premier et second supports (27, 28) sont montés à rotation sur deux manivelles respectives (15 à 18) entraînées en continu et de façon synchrone, dont les rayons de manivelle (22) sont approximativement de même longueur.

5. Dispositif selon la revendication 4, dans lequel la longueur des surfaces d'appui (50, 51) représente au moins 0,05 fois le rayon de manivelle (22) et les surfaces d'appui (50, 51) sont de préférence planes.

6. Dispositif selon l'une des revendications 1 à 5, dans lequel les deux éléments formant butée (62) sont réalisés sous la forme de galets qui font saillie sur le côté de la mâchoire de scellement (37) et de la contre-mâchoire (38), respectivement, et qui sont montés à rotation autour d'axes parallèles au plan médian (4).

7. Dispositif selon l'une des revendications 1 à 6, dans lequel chaque élément d'appui (48, 49) est un membre d'un parallélogramme articulé respectif (48, 49, 53), dont une branche est reliée par une liaison d'entraînement au mécanisme de commande (54).

8. Dispositif selon l'une des revendications 1 à 7, dans lequel le centre de rotation de la mâchoire de scellement (37) et de la contre-mâchoire (38) est réglable dans une direction transversale au plan médian (4).

9. Dispositif selon l'une des revendications 1 à 8, dans lequel le mécanisme de commande (54) comporte des moyens de réglage (58, 59).

10. Dispositif selon l'une des revendications 1 à 9, dans lequel les butées (44) et la précontrainte de la mâchoire de scellement (37) et de la contre-mâchoire (38) sont réglables.
